# EUROPÄISCHE PATENTSCHRIFT

(11) **EP 0 955 274 B1**
(45) Veröffentlichungstag und Bekanntmachung des Hinweises auf die Patenterteilung: **02.01.2004**
(21) Anmeldenummer: 99107149.9
(22) Anmeldetag: 13.04.1999
(51) Int. Cl.: C03C 8/02, C03C 3/062, C03C 3/064, C03C 17/04

(54) **Niedrig schmelzende, bleifreie Glas- und Emailzusammensetzungen mit hohem Bismutgehalt**
Low-melting, lead-free glass and enamel compositions with high bismuth content
Compositions de verre et d'émail sans plomb à bas point de fusion ayant une haute teneur en bismuth

(30) Priorität: 27.04.1998 US 66534; 27.04.1998 US 66533
(43) Veröffentlichungstag der Anmeldung: 10.11.1999
(73) Patentinhaber: Ferro GmbH, 60327 Frankfurt (DE)
(72) Erfinder: Sakoske, George E., 44124 Mayfield, Heights, Ohio (US)
(74) Vertreter: Reinhardt, Markus, Dipl.-Ing.

(56) Entgegenhaltungen:
- EP-A- 0 370 683
- EP-A- 0 782 974
- EP-A- 0 854 120
- EP-A- 0 895 969
- US-A- 4 554 258
- US-A- 5 643 636

## Beschreibung

Diese Erfindung betrifft bei niedriger Temperatur schmelzende bleifreie Glas- und Emailzusammensetzungen, welche einen hohen Bismut- und niedrigen oder keinen Borgehalt haben und gute Haltbarkeitseigenschaften zeigen.

### Hintergrund der Erfindung

Bleifreie Glaszusammensetzungen sind in der Fachwelt bekannt. Als Beispiele hierfür können die folgenden genannt werden:

| | |
|---|---|
| Reinherz | US-Patent Nr. 4 892 847 |
| Francel | US-Patent Nr. 4 554 258 |
| Roberts | US-Patent Nr. 5 252 521 |
| Klimas | US-Patent Nr. 4 970 178 |
| Clifford | US-Patent Nr. 5 308 803 |
| Murkens | US-Patent Nr. 5 093 285 |
| Ryan | US-Patent Nr. 5 559 059 |
| Newman | UK-Patent Nr. 2 301 100 |
| Prunchak | US-Patent Nr. 5 629 247. |

Zusätzliche Offenbarungen von bleifreien Glaszusammensetzungen werden von Francel et al., US-Patent Nr. 4 446 241, Francel et al., US-Patent Nr. 4 537 862, Reade, US-Patent Nr. 4 224 047, Eppler, US-Patent Nr. 4 312 951, Eppler, US-Patent Nr. 4 376 169, Emlemdi, US-Patent Nr. 5 504 045, Manabe et al., US-Patent Nr. 5 578 533 und Evans et al., Internationale Anmeldung Nr. PCT/EP94/00403 gebildet. Des weiteren sollte meiner EP-Anmeldung 0 895 969 A1 Beachtung geschenkt werden.

Diese Glaszusammensetzungen werden im allgemeinen verwendet, um in weithin bekannter Weise Glasfritten zu bilden, welche wiederum zur Formulierung von Glasemailzusammensetzungen verwendet werden. Diese Glas- (oder Keramik-) Emailzusammensetzungen sind bekannt dafür, zur Bildung von dekorativen Beschichtungen für Glasware, Porzellanware, Konstruktionsglas und ähnlichem zweckmäßig zu sein. Sie sind vor allem zur Bildung von farbigen Rändern um Glasscheiben, die als Autowindschutzscheiben verwendet werden, Parklichtern und Rücklichtern, geeignet. Diese farbigen Ränder verbessern das Aussehen und verhindern den UV-bedingten Abbau der darunterliegenden Klebstoffe.

Im allgemeinen bestehen diese Emailzusammensetzungen im wesentlichen aus einer Glasfritte, einem Farbstoff und einem organischen Träger. Sie werden auf das gewünschte Substrat aufgetragen und anschließend erwärmt, um den organischen Träger auszubrennen und die Fritte einzuschmelzen, wobei die Emailbeschichtung auf das Substrat gebunden wird.

Glasscheiben für Autos werden im allgemeinen mit der keramischen Emailzusammensetzung beschichtet und anschließend einem Formgebungsverfahren bei erhöhten Temperaturen unterzogen. Während dieser Behandlung schmilzt das Email und brennt in das Glassubstrat, wobei das Glas zur gewünschten Endgestalt geformt wird. Viele Beschichtungen des Standes der Technik zeigen jedoch eine Tendenz, an den Materialien zu haften, die die Preßform bedecken, wie beispielsweise mit Glasfaserstoff oder Metallfaserstoff beschichtete Preßformen, weil diese herkömmlichen Emails eine niedrige Viskosität nach dem Schmelzen haben und an anderen Materialien bei erhöhter Temperatur haften. Dementsprechend sind diese Materialien nicht zur Verwendung in Glasformverfahren geeignet, in welchen die erwärmten, mit Email beschichteten Gläser mit Material beschichteten Preßformen in Kontakt kommen.

Verschiedene Methoden wurden vorgeschlagen, um das Formen von Glasscheiben mit einer keramischen Emailbeschichtung zu erleichtern, die erhöhten Krümmungs- oder Formungstemperaturen widerstehen und ohne Haftung an die Preßform wiederholt den Kontakt von Glasscheibe und beschichteter Preßform ermöglichen. Beispielsweise schlagen die US-Patentschriften 4 596 590 und 4 770 685 (eingereicht von Boaz) und EP 201 241 den Zusatz von einem niedervalenten Metalloxidpulver, beispielsweise Kupferoxid, zu Farbzusammensetzungen vor, um eine Anti-Stick-Schicht zwischen der Beschichtung und den glasfaserstoffbeschichteten Preßwerkzeugen zur Verfügung zu stellen. US-Patent Nr. 4 684 389, 4 857 096 und 5 037 783 (eingereicht von Boaz) schlagen die Zugabe von fein verteiltem Zinkmetallpulver vor, um den gleichen Effekt zu erzielen. Die Verwendung von einem Eisenmetallpulver wird in US-Patent Nr. 4 983 196 (eingereicht von Stotka) vorgeschlagen.

Die Verwendung von anderen Metalloxidpulvern, einschl. Bismutoxid enthaltenden Formulierungen wurde in US-Patent Nr. 4 029 605 (eingereicht von Kosiorek), 4 098 949 (eingereicht von Kosiorek), 4 892 847 (eingereicht von Reinherz), 4 959 090 (eingereicht von Reinherz), 4 970 178 (eingereicht von Klimas et al.), 5 093 285 (eingereicht von Murkens), 5 203 902 (eingereicht von Murkens) und EP 370 693 vorgeschlagen.

Gewisse Bismut enthaltende Systeme erzeugen jedoch ein schwaches Glas, wenn beispielsweise Lithium vorhanden ist, und haben schlechte Silberdiffusionseigenschaften sowie ungenügende Anti-Stick-Eigenschaften.

US-Patent Nr. 4 828 596 schlägt die Zugabe von Kupfersulfid oder Kupfersulfat in die Keramikemail-Zusammensetzungen als Anti-Stick-Mittel vor. Sulfide oder Sulfate von anderen Metallen wurden als Anti-Stick-Mittel in US-Patent Nr. 4 822 396 (eingereicht von Reinherz) vorgeschlagen.

Eine angeblich verbesserte Anti-Stick-Keramikemail-Zusammensetzung wird von US-Patent Nr. 5 153 150 und 5 208 191 (eingereicht von Ruderer et al.) vorgeschlagen, worin ein Impfkristallpulver, welches Zn₂SiO₄ enthält, in eine Oxidzusammensetzung mit oder ohne vorhandenem Bismutoxid zugegeben wird.

Eine Vielzahl von vorhergehenden Keramikemailsystemen verwendet eine Blei enthaltende Glasfritte, welches ein weiteres Problem darstellt. Aus Gründen des Umweltschutzes ist es wünschenswert, die Verwendung von jedem System zu vermeiden, das Blei enthält.

Auch wenn einige der zuvor genannten Emailsysteme in den herkömmlichen Glasformverfahren eine einigermaßen gute Leistungsfähigkeit zeigen, ist diese zur Verwendung in den neuerlich entwickelten "deep bend" Verfahren zur Formung von Autoglas nicht zufriedenstellend.

Es ist wesentlich, daß die Emailzusammensetzungen eine adäquate Festigkeit gegen bestimmte chemische Stoffe zeigen, mit welchen sie in Kontakt kommen können, und viele der herkömmlichen Zusammensetzungen versagen in dieser Hinsicht.

Jede der zuvor bekannten Emailzusammensetzungen leidet unter einem oder mehreren der zuvor genannten Nachteile, so daß es wünschenswert erscheint, eine Zusammensetzung zur Verfügung zu stellen, welche diese Unzulänglichkeiten vermeidet. Die vorliegende Erfindung stellt solche Keramikemail-Zusammensetzungen, ein Verfahren zur Verwendung der Zusammensetzungen und hiermit beschichtete Substrate zur Verfügung.

Die vorliegende Erfindung stellt eine Glaszusammensetzung und hieraus hergestellte Glasfritten zur Verfügung, welche zur Herstellung von Emails geeignet sind, die verbesserte chemische Haltbarkeitseigenschaften der eingebrannten Emailbeschichtung zeigen. Gegenwärtig verwendet die einzige bleifreie, für Automobilemail geeignete Glasfritte, die den Schwefelsäurehaltbarkeitstest besteht, der beispielsweise in Japan notwendig ist, Lithiumionen. Wenn nicht sorgfältig kontrolliert wird, kann die Verwendung von Lithium jedoch ungewünschte Spannungen und Substratrisse hervorrufen. Die neuen Glaszusammensetzungen dieser Erfindung vermeiden dieses Problem. Diese Zusammensetzungen zeigen auch ausgezeichnete Anti-Stick-Eigenschaften.

### Beschreibung der Erfindung

Die vorliegende Erfindung stellt neue Glaszusammensetzungen zur Verfügung, aus denen Bismutborsilicat enthaltende Glasfritten erhalten werden können, welche einen hohen Bismutgehalt, aber nur einen niedrigen Borgehalt haben oder borfrei sind. Für diese Systeme ist die Verwendung von Zirkoniumdioxid, Titanoxid oder Lithiumoxid innerhalb des Bereichs der Zusammensetzung nicht notwendig.

Erfindungsgemässe Glaszusammensetzungen ergeben sich aus den Ansprüchen.

Überraschenderweise sind der Schmelzpunkt der beanspruchten Glaszusammensetzung niedrig und die Säureresistenz sehr hoch.

Die erfindungsgemäße Glaszusammensetzung besteht im wesentlichen aus

| | |
|---|---|
| Bi₂O₃ | 50-65 Gew.-% |
| SiO₂ | 28-38 Gew.-% |
| B₂O₃ | 0-2,8 Gew.-% |
| Al₂O₃ | 0-3 Gew.-% |
| TiO₂ | 0-3 Gew.-% |
| Na₂O | 1-6 Gew.-% |
| K₂O | 0-1, 5 Gew.-% |
| Li₂O | 0-1 Gew.-% |
| F⁻¹ | 0-2 Gew.-%. |

Es wurde gefunden, daß innerhalb dieses Bereiches ein bevorzugter Bereich von Glaszusammensetzungen liegt:

| Oxidkomponente | Bereich (Gew.-%) | Bevorzugter Bereich (Gew.-%) |
|---|---|---|
| Bi₂O₃ | 50-65 | 54-64 |
| SiO₂ | 28-38 | 29-37 |
| B₂O₃ | 0-2,8 | 1-2,7 |
| Al₂O₃ | 0-3 | 0,3-1,0 |
| TiO₂ | 0-3 | 1-2 |
| Na₂O | 1-6 | 3-4,5 |
| K₂O | 0-1,5 | 0-1 |
| Li₂O | 0- 1 | 0 |
| F⁻¹ | 0-2 | 0 |

Die Glaszusammensetzungen werden auf bekannte Weise, wie beispielsweise Mischen der bekannten Ausgangsmaterialien und Schmelzen bei Temperaturen von etwa 1000-1300°C für etwa 40 (vierzig) Minuten gebildet, um ein geschmolzenes Glas mit der gewünschten Zusammensetzung zu bilden. Das gebildete, geschmolzene Glas kann anschließend abgeschreckt werden, beispielsweise mit Wasser schockgekühlt werden, um auf eine bekannte Weise eine Fritte zu bilden. Die Fritte. kann anschließend unter Verwendung von herkömmlichen Mahltechniken zu einer feinen Korngröße, vorzugsweise zwischen 2 bis 6 Mikron gemahlen werden.

Die Erfindung stellt Glas-(Keramik-)Emailzusammensetzungen zur Verfügung, in denen die oben beschriebenen Glasfrittenzusammensetzungen verwendet werden. Diese Zusammensetzungen weisen etwa 30 bis 95 Gew.-% Feststoffe der Glasfrittenkomponente auf.

Diese Komponente weist die offenbarten Glasfrittenkomponenten auf. Diese Glasf rittenkomponente kann als einzelne Zusammensetzung der Erfindung oder alternativ als Mischung von diesen Fritten verwendet werden. Zumindest eine Fritte der vorliegenden Erfindung kann mit einer zusätzlichen, niedrig schmelzenden Fritte mit einer Zusammensetzung außerhalb des erfindungsgemäßen Bereichs kombiniert werden, wobei das Ausmaß dieser anderen Fritte dadurch beschränkt ist, daß sie nicht die Qualitäten der resultierenden Emailzusammensetzung zerstört.

Ein Beispiel dieser anderen Fritte, die eingesetzt werden kann, ist eine mit einer Zusammensetzung wie folgt:

| Oxid | Gew.-% Bereich |
|---|---|
| SiO₂ | 20-35 |
| Bi₂O₃ | 10-50 |
| ZnO | 5-45 |
| B₂O₃ | 5-15 |
| Na₂O₃ | 1-7 |
| CaO | 0-10 |
| TiO₂ | 0-2 |
| Al₂O₃ | 0-5 |
| ZrO₂ | 0-2 |
| F₂ | 0-1 |

Ein Verfahren zur Herstellung solch einer Fritte wird in US-Patent Nr. 5 346 651 offenbart. Diese Fritten haben eine ausreichend geringe Einbrenntemperatur, um die adäquate Haftung auf dem Substrat sicherzustellen und zeigen auch Eigenschaften einer niedrigen Dichte.

Die fein gemahlene Glasfritte kann mit einem gemischten Metalloxidpigment, jedem anderen Typ von Metallpulver, Metallvorstufe oder anderen Material der Wahl kombiniert werden. Typisch werden gemischte Metalloxidpigmente verwendet, um schwarze Farben in der Automobilindustrie zu erzeugen, welche Oxide von Kupfer, Chrom, Eisen, Cobalt, Nickel, Mangan und ähnliche umfassen. Obwohl diese schwarzen Spinellpigmente für die Verwendung in der Automobilindustrie bevorzugt werden, erzeugen andere Metalloxidpigmente verschiedene Farben, welche mit den Glasfrittenzusammensetzungen dieser Erfindung kombiniert werden können. Andere Endanwendungen können, und sind nicht hierauf begrenzt, Anwendungen in der Architektur und Getränkeindustrie umfassen. Die Pigmentkomponente umfaßt im allgemeinen von 5 bis 40 Gew.-% der Glasfritte, abhängig von dem gewünschten Bereich der Farbe, des Glanzes und der Opazität.

Verwendbare Pigmente sind in der Fachwelt bekannt und kommerziell erhältlich. Beispiele sind unter anderem CuCr₂O₄, (Co, Fe) (Fe, Cr)₂O₄ und ähnliche. Beispielhaft sind Pigmente erhältlich von Cerdec Corporation wie *2991 Pigment, welches ein Kupferchromat(III)-Schwarzpigment ist, *2980 Pigment, welches ein Cobaltchromeisen-Schwarzpigment ist, und *2987-Pigment, welches ein Nickelmanganeisenchrom-Schwarzpigment ist.

Die erfindungsgemäße Emailzusammensetzung kann auch bis zu 15 % Feststoffe enthalten, die im allgemeinen als Füllstoff verwendet werden, wie beispielsweise Siliciumdioxid und Aluminiumoxid und andere herkömmliche Zusatzstoffe, wie beispielsweise Eisen, Silicon, Zink und ähnliche, um gewünschte Eigenschaften zu verstärken, wie beispielsweise Festigkeit gegen Silberdiffusion. Die Füllstoffe können auch ein wärmebeständiger Oxidfüllstoff, wie beispielsweise Wollastonit und Materialien, wie beispielsweise Aluminiumsilicatmaterialien, Calciumsilicatverbindungen, Boraluminiumsilicatverbindungen, Natriumcalciumaluminiumsilicatverbindungen, Feldspatverbindungen, Titania und Kombinationen dieser Oxide sein.

Die Emailzusammensetzungen können auch bis zu 20 Gew.-% Feststoffe eines Impfkristallmaterials, wie beispielsweise Bismutsilicat gemäß EP 0 782 974 A1, enthalten, welche hierin durch Referenz umfaßt sein soll. Die Bismutsilicatimpfkristallmaterialien umfassen Bi₁₂SiO₂₀, Bi₄(SiO₄)₃ und Bi₂SiO₅, sind aber nicht hierauf beschränkt.

Die Emailzusammensetzungen werden mit einem organischen Träger kombiniert, um eine auftragbare Emailpaste zu bilden.

Die Emailpaste enthält im allgemeinen von etwa 85 bis etwa 60 Gew.-% Feststoffe, wie zuvor beschrieben und etwa 15 bis etwa 40 Gew.-% eines geeigneten organischen Trägers. Die Viskosität der Paste wird so eingestellt, daß sie mit Siebdruck, Walzenbeschichtung oder Sprühen auf das gewünschte Substrat aufgetragen werden kann.

Der in der Paste eingesetzte Träger wird aufgrund seiner Endanwendung ausgewählt. Es ist wesentlich, daß der Träger adäquat in den Feststoffen suspendiert und vollständig beim Einbrennen aus der Paste auf dem Substrat ausbrennt. Träger sind typischerweise organischer Natur und umfassen Zusammensetzungen, die auf Kiefernharzen, Pflanzenölen, Mineralölen, Erdölfraktionen mit geringem Molekulargewicht, Tridecylalkoholen, synthetischen und natürlichen Harzen und ähnlichen basieren. Tenside und/oder andere Film bildende Modifikatoren können ebenfalls enthalten sein.

Entsprechend können UV-basierte Träger in der vorliegenden Erfindung verwendet werden. Diese UV-basierten Träger sind in der Fachwelt weithin bekannt und sind im allgemeinen aus polymerisierbaren Monomeren und/oder Oligomeren, die beispielsweise funktionelle Acrylat- oder Methacrylat-Gruppen enthalten, sowie Photoinitiatoren und Polymerisationsinhibitoren zusammengesetzt. Beispielhafte Systeme werden in US-Patent Nr. 4 306 012 und 4 649 062 offenbart. Es ist bekannt, daß diese Systeme mit Ultraviolettbestrahlung nach dem Auftragen auf dem Substrat gehärtet werden.

Der spezifische Träger und eingesetzte Mengen werden aufgrund der spezifischen Komponenten der Paste und der gewünschten Viskosität ausgewählt. Im allgemeinen beträgt die Menge des Trägers etwa 15 bis etwa 40 Gew.-%, bezogen auf das Gesamtgewicht der Emailpaste.

Im allgemeinen sind die Emailpasten viskoser Natur, wobei die Viskosität vom eingesetzten Auftragungsverfahren und von der Endanwendung abhängig ist. Für Siebdruckzwecke sind Viskositäten geeignet, die von 10 bis 80 und vorzugsweise 35 bis 65 Pa ^{·} s bei 20 °C reichen, bestimmt auf einem Brookfield Viskosimeter, Spindel # 7 bei 20 U/min.

Die Erfindung stellt auch ein Substrat mit einer hierauf eingebrannten, erfindungsgemäßen Emailpaste zur Verfügung. Solche Substrate sind beispielsweise Glas, Keramik oder andere nicht poröse Substrate, und vor allem Automobilglassubstrate. Andere Substrate umfassen Gläser für Fassaden, Vorrichtungen und Getränkebehälter.

Um die erfindungsgemäßen Emailzusammensetzungen herzustellen, wird die notwendige Fritte oder Fritten zu einem feinen Pulver unter Verwendung herkömmlicher Verfahren gemahlen. Die Frittenkomponente wird anschließend mit den anderen Feststoffkomponenten kombiniert. Die Feststoffe werden anschließend mit dem notwendigen Träger gemischt, um die Emailpaste zu bilden. Die Viskosität wird wie gewünscht eingestellt.

Sobald die Emailpaste hergestellt ist, kann sie auf das Substrat auf herkömmliche Weise, wie beispielsweise durch Siebdruck, Abziehauftrag, Sprühen, Streichen, Walzenbeschichten und ähnliche aufgetragen werden. Siebdruck wird bevorzugt, wenn die Paste auf ein Glassubstrat aufgebracht wird. Nach Auftrag der Paste auf ein Substrat in gewünschter Art wird die aufgetragene Beschichtung eingebrannt, um das Email auf das Substrat zu binden. Die Einbrenntemperatur wird im allgemeinen durch die Garbrandungstemperatur der Fritte bestimmt und liegt vorzugsweise in einem breiten Temperaturbereich. Typischerweise liegt die Einbrenntemperatur für eine erfindungsgemäße Zusammensetzung im Bereich von etwa 500 bis 750°C, vorzugsweise im Bereich von etwa 520 bis 650°C und ganz besonders bevorzugt etwa 530 bis 620°C.

### Beispiele

Niedrig schmelzende Glasfrittenzusammensetzungen werden durch Zusammenmischen der Rohmaterialien, welche in der Fachwelt bekannt sind, unter Verwendung von dem Fachmann bekannten Verfahren hergestellt. Die gut gemischten Rohzusammensetzungen werden anschließend bei Temperaturen zwischen 1000 und 1300°C geschmolzen, danach abgeschreckt, wiederum unter Verwendung von Verfahren, die dem Fachmann bekannt sind. Die Glaszusammensetzungen werden anschließend auf eine kleine Partikelgröße gemahlen, vorzugsweise zwischen 2 und 6 Mikron unter Verwendung einer Kugelmühle. Die fein gemahlenen Pulverfritten werden anschließend verwendet, um Glasemailzusammensetzungen zu bilden.

Die feingemahlene Glasfritte wird mit einem gemischten Metalloxidpigment kombiniert.

Darüber hinaus werden die Festkörper der Emailzusammensetzungen in einem gemäß der Endanwendung ausgewählten Träger dispergiert und suspendiert, um eine Emailpaste zu bilden.

Die Untersuchung wurde durchgeführt, indem die Glasfritten oder Emailzusammensetzungen mit einem auf Kiefernöl basierten Träger kombiniert wurde, wobei die resultierende Fritten- oder Emailpaste auf einem Objektträger oder Autoglassubstrat mit Siebdruck aufgetragen wurde. Die Objektträger oder Automobilglassubstrate werden anschließend bei verschiedenen Temperaturen gebrannt, um die "Einbrenntemperatur", (firing temperature, FT), oder "minimale Einbrenntemperatur" (minimum firing temperature, MF) zu bestimmen. Die FT ist die Temperatur, bei der das Glas eine genügende Zeit zum Fließen und zum Einschmelzen innerhalb eines 15 minütigen Einbrennens hat und zu einer glänzenden, glatten Oberfläche führt. Die MF ist die Temperatur, bei der das Email eine genügende Zeit zum Fließen und zum Einschmelzen bei einem 4 minütigen Einbrennen hat und zu einem Email ohne verbundene Porosität führt. Die Vorwärmzeit beträgt 10 bzw. 6 Minuten bei 427°C für FT bzw. MF.

Die Säurefestigkeit wird gemäß ASCM C-724-91 bestimmt, wobei eine 10 Gew.-%ige Zitronensäurelösung verwendet wird. Eingebrannte Proben werden für 15 Minuten der Lösung ausgesetzt und gemäß dem folgenden bewertet:
- Grad 1 -: Keine ersichtliche Ätzung
- Grad 2 -: Farbspielerscheinungen oder sichtbare Färbung auf der ausgesetzten Oberfläche, wenn mit einem Winkel von 45° betrachtet wird, aber nicht sichtbar, wenn die Betrachtung aus einem Winkel < 30° vorgenommen wird.
- Grad 3 -: Eine eindeutige Färbung, welche reflektierte Bilder nicht verschwimmen läßt und die auch bei Winkeln < 30° sichtbar ist.
- Grad 4 -: Eindeutige Färbung mit einer starken Farbänderung oder stark schillernder Oberfläche, die bei Winkeln < 30° sichtbar ist und bei der reflektierte Bilder verschwommen dargestellt werden.
- Grad 5 -: Glanzlose Oberfläche oder Mattierungen mit möglichem kalkigen Belag.
- Grad 6 -: Deutliche Entfernung von Email mit offensichtlicher Porenbildung.
- Grad 7 -: Vollständige Entfernung des Emails auf der behandelten Fläche.

**Tabelle 1:**

| Glasfrittenformulierungen (Gew.-%) | | | |
|---|---|---|---|
| Komponente | Bsp.1 | Bsp.2 | Bsp.3 |
| Bi₂O₃ | 58,29 | 61,06 | 54,24 |
| SiO₂ | 36,34 | 32,39 | 38,08 |
| B₂O₃ | 0 | 1,60 | 1,96 |
| Al₂O₃ | 0,20 | 0,24 | 0,29 |
| TiO₂ | 0,94 | 1,15 | 1,69 |
| Na₂O | 3,56 | 3,56 | 3,74 |
| K₂O | 0,67 | 0 | 0 |
| Einbrenntemp. (°C) | 582 | 568 | 582 |
| Säureresistenz ASTM C-724-91 | 1 | 1 | 1 |

Die folgenden schwarzen Automobilemailformulierungen wurden mit Fritten gemäß den Beispielen 1 bis 3 hergestellt.

**Tabelle 2:**

| Schwarze Emailformulierung (Gew.-%) | | | | |
|---|---|---|---|---|
| Komponente | Bsp.4 | Bsp.5 | Bsp.6 | Bsp.7 |
| Frittenbeispiel 1 | 80,0 | | | |
| Frittenbeispiel 2 | | 80,0 | 79,00 | |
| Frittenbeispiel 3 | | | | 80,0 |
| *2980 | 20,0 | 20,0 | 20,0 | 20,0 |
| RD-2077 | | | 1,0 | |
| Min.-Brand (°C) | 632 | 610 | 621 | 627 |
| Säureresistenz ASTM C-724-91 | 1 | 1 | 1 | 1 |
| Anti-StickEigeschaften | | | gut | |

| | | | | |
|---|---|---|---|---|
| *2980 ist ein Cobaltchrompigment und RD-2077 ist ein Bismutsilicatmaterial. Beide Materialien sind von Cerdec Corporation, Drakenfeld Products, West Wylie Avenue, Washington, Pennsylvania kommerziell erhältlich. Anti-Stick-Eigenschaften wurden durch Druck des Emails auf ein 4" x 4" großes Stück eines Automobilglassubstrates bewertet, indem es in einem 3 bis 5-minütigen automobilartigen Einbrennzyklus erhitzt und mit einem Stempel eines kommerziell verwendeten Materials gepreßt wurde, wobei das heiße Email und das Substrat in dem Ofen verblieben sind. | | | | |

## Patentansprüche

1. Glaszusammensetzung bestehend im wesentlichen aus
| | |
|---|---|
| Bi₂O₃ | 50 - 65 Gew.-% |
| SiO₂ | 28 - 38 Gew.-% |
| B₂O₃ | 0 - 2,8 Gew.-% |
| Al₂O₃ | 0 - 3 Gew.-% |
| TiO₂ | 0 - 3 Gew.-% |
| Na₂O | 1 - 6 Gew.-% |
| K₂O | 0 - 1,5 Gew.-% |
| Li₂O | 0 - 1 Gew.-% |
| F⁻¹ | 0 - 2 Gew.-%. |

2. Glaszusammensetzung nach Anspruch 1, bestehend im wesentlichen aus
| | |
|---|---|
| Bi₂O₃ | 54 - 63 Gew.-% |
| SiO₂ | 29 - 37 Gew.-% |
| B₂O₃ | 1 - 2,7 Gew.-% |
| Al₂O₃ | 0,3 - 1,0 Gew.-% |
| TiO₂ | 1 - 2 Gew.-% |
| Na₂O | 3 - 4,5 Gew.-% |
| K₂O | 0 - 1 Gew.-% |
| Li₂O | 0 |
| F⁻¹ | 0 |

3. Glasfritte hergestellt aus einer Glaszusammensetzung gemäß einem der Ansprüche 1 oder 2.

4. Glasemailpaste, welche eine Glasfrittenkomponente gemäß Anspruch 3, eine oxidische Pigmentkomponente und einen organischen Träger aufweist.

5. Glasemailpaste gemäß Anspruch 4, **dadurch gekennzeichnet, daß** der Feststoffgehalt etwa 85 bis etwa 60 Gew.-% beträgt.

6. Glasemailpaste gemäß Anspruch 4 oder 5, **dadurch gekennzeichnet, daß** die Glasfrittenkomponente auch ein oder mehrere andere Glasfritten enthält, die bei niedriger Temperatur schmelzen.

7. Glasemailpaste gemäß einem oder mehreren der Ansprüche 4 bis 6, welche bis zu 20 Gew.-% Feststoffe eines Impfkristallmaterials aufweist.

8. Glasemailpaste gemäß Anspruch 7, **dadurch gekennzeichnet, daß** das Impfkristallmaterial Bismutsilicat ist.

9. Ein nichtporöses Substrat mit einer hierauf eingebrannten Glasemailpaste, wie in einem oder mehreren der Ansprüche 4 bis 8 beschrieben.

10. Ein Substrat gemäß Anspruch 9, welches ein Automobilglas ist.

## Claims

1. Glass composition consisting substantially of
| | |
|---|---|
| Bi₂O₃ | from 50 to 65 wt. % |
| SiO₂ | from 28 to 38 wt.% |
| B₂O₃ | from 0 to 2.8 wt. % |
| Al₂O₃ | from 0 to 3 wt.% |
| TiO₂ | from 0 to 3 wt.% |
| Na₂O | from 1 to 6 wt.% |
| K₂O | from 0 to 1.5 wt.% |
| Li₂O | from 0 to 1 wt.% |
| F⁻¹ | from 0 to 2 wt.%. |

2. Glass composition according to claim 1, consisting substantially of
| | |
|---|---|
| Bi₂O₃ | from 54 to 63 wt.% |
| SiO₂ | from 29 to 37 wt.% |
| B₂O₃ | from 1 to 2.7 wt.% |
| Al₂O₃ | from 0.3 to 1.0 wt. % |
| TiO₂ | from 1 to 2 wt.% |
| Na₂O | from 3 to 4.5 wt.% |
| K₂O | from 0 to 1 wt.% |
| Li₂O | 0 |
| F⁻¹ | 0. |

3. Glass frit produced from a glass composition according to either claim 1 or claim 2.

4. Vitreous enamel paste, which contains a glass frit component according to claim 3, an oxidic pigment component and an organic carrier.

5. Vitreous enamel paste according to claim 4, **characterised in that** the solids content is from approximately 85 to approximately 60 wt.%.

6. Vitreous enamel paste according to claim 4 or 5, **characterised in that** the glass frit component also contains one or more other glass frits which melt at a low temperature.

7. Vitreous enamel paste according to one or more of claims 4 to 6, which contains up to 20 wt.% solids of a seed crystal material.

8. Vitreous enamel paste according to claim 7, **characterised in that** the seed crystal material is bismuth silicate.

9. A non-porous substrate having a vitreous enamel paste as described in one or more of claims 4 to 8 baked thereon.

10. A substrate according to claim 9, which is automotive glass.

## Revendications

1. Composition de verre composée essentiellement de
| | |
|---|---|
| Bi₂O₃ | à raison de 50% à 65% en poids |
| SiO₂ | à raison de 28% à 38% en poids |
| B₂O₃ | à raison de 0% à 2,8% en poids |
| Al₂O₃ | à raison de 0% à 3% en poids |
| TiO₂ | à raison de 0% à 3% en poids |
| Na₂O | à raison de 1% à 6% en poids |
| K₂O | à raison de 0% à 1,5% en poids |
| Li₂O | à raison de 0% à 1% en poids |
| F⁻¹ | à raison de 0% à 2% en poids |

2. Composition de verre selon la revendication 1, composée essentiellement de
| | |
|---|---|
| Bi₂O₃ | à raison de 54% à 63% en poids |
| SiO₂ | à raison de 29% à 37% en poids |
| B₂O₃ | à raison de 1% à 2,7% en poids |
| Al₂O₃ | à raison de 0,3% à 1,0% en poids |
| TiO₂ | à raison de 1% à 2% en poids |
| Na₂O | à raison de 3% à 4,5% en poids |
| K₂O | à raison de 0% à 1% en poids |
| Li₂O | à raison de 0% |
| F⁻¹ | à raison de 0% |

3. Fritte de verre préparée à partir d'une composition de verre selon la revendication 1 ou 2.

4. Pâte d'émail vitrifié, laquelle présente un composant de la fritte de verre selon la revendication 3, un composant de pigment contenant un oxyde et un support organique.

5. Pâte d'émail vitrifié selon la revendication 4, **caractérisée en ce que** la teneur en matières solides va d'environ 85% à environ 60% en poids.

6. Pâte d'émail vitrifié selon la revendication 4 ou 5, **caractérisée en ce que** le composant de la fritte de verre contient également une ou plusieurs autres frittes de verre qui fondent à basse température.

7. Pâte d'émail vitrifié selon l'une ou plusieurs des revendications 4 à 6, laquelle présente jusqu'à 20% en poids de matières solides d'un matériau de germe cristallin.

8. Pâte d'émail vitrifié selon la revendication 7, **caractérisée en ce que** le matériau de germe cristallin est le silicate de bismuth.

9. Substrat non poreux sur lequel a été cuite une pâte d'émail vitrifié telle que décrite selon l'une ou plusieurs des revendications 4 à 8.

10. Substrat selon la revendication 9 qui est un verre pour l'automobile.
